# FASCICULE DE BREVET EUROPEEN

(11) **EP 4 240 956 B1**
(45) Date de publication et mention de la délivrance du brevet: **01.01.2025**
(21) Numéro de dépôt: 21815237.9
(22) Date de dépôt: 03.11.2021
(51) Int. Cl.: F02K 1/04, F02K 1/80

(54) **ENSEMBLE POUR UNE TURBOMACHINE**
ANORDNUNG FÜR EINE TURBOMASCHINE
ASSEMBLY FOR A TURBOMACHINE

(30) Priorité: 05.11.2020 FR 2011383
(43) Date de publication de la demande: 13.09.2023
(73) Titulaire: Safran Nacelles, 76700 Gonfreville-l'Orcher (FR)
(72) Inventeur: JORET, Jean-Philippe, 77550 MOISSY-CRAMAYEL (FR); DEVANLAY, Vincent, 77550 MOISSY-CRAMAYEL (FR); OLLIVIER, Marine, 77550 MOISSY-CRAMAYEL (FR); LEVIEUX, Guillaume, 77550 MOISSY-CRAMAYEL (FR)
(74) Mandataire: Ernest Gutmann - Yves Plasseraud S.A.S.
(86) Numéro de dépôt international: PCT/FR2021/051936
(87) Numéro de publication internationale: WO 2022/096822

(56) Documents cités:
- FR-A1- 2 949 820
- FR-A1- 2 987 079
- FR-A1- 3 084 916
- FR-A1- 3 084 917

## Description

### Domaine technique de l'invention

L'invention concerne un ensemble pour une turbomachine, en particulier un ensemble d'éjection pour un turboréacteur ou un turbopropulseur d'avion.

### Etat de la technique antérieure

Un ensemble propulsif pour un aéronef, également appelé système propulsif intégré, comporte classiquement une turbomachine, par exemple un turboréacteur, une nacelle et un mât ou pylône d'accrochage destiné à permettre l'accrochage de l'ensemble propulsif sur une partie structurelle, par exemple sous l'aile, de l'aéronef.

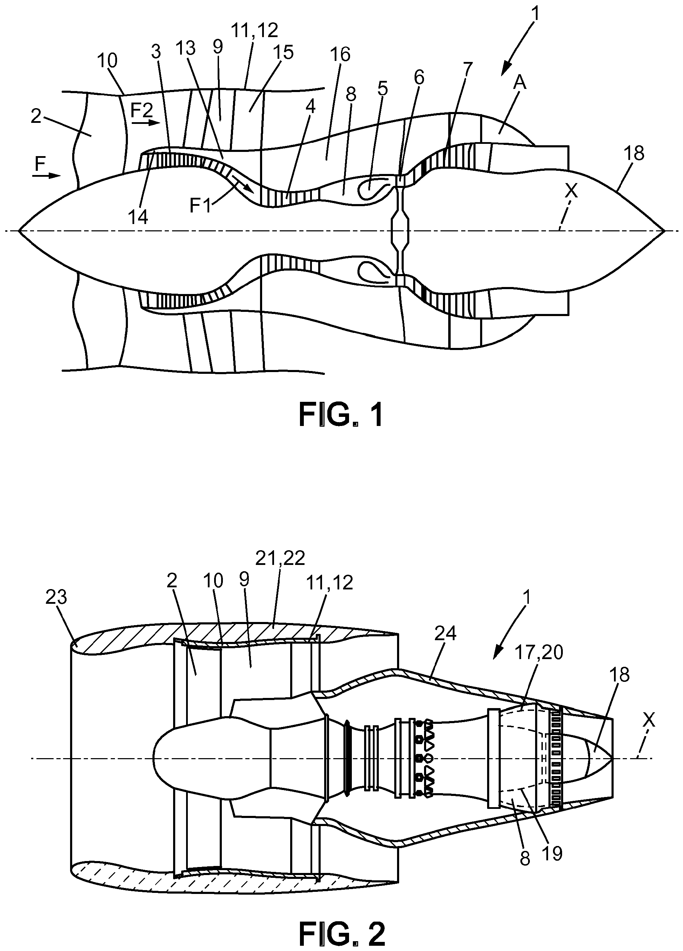

La turbomachine est par exemple un turboréacteur à double flux. Une telle turbomachine 1, illustrée à la figure 1, présente un axe X et comporte de l'amont vers l'aval dans le sens de circulation des gaz au sein de la turbomachine, une soufflante 2, un compresseur basse pression 3, un compresseur haute pression 4, une chambre de combustion 5, une turbine haute pression 6 et une turbine basse pression 7.

Dans la suite de la description, les termes amont et aval sont définis par rapport au sens de circulation des gaz au sein de la turbomachine.

Par ailleurs, les termes axial, radial et circonférentiel sont définis par rapport à l'axe X de la turbomachine.

L'air F entrant au niveau de la soufflante est divisé en un flux d'air primaire F1 circulant au travers d'une veine dite primaire 8 et en un flux d'air secondaire F2 circulant au travers d'une veine dite secondaire 9, entourant la veine primaire 8. Les compresseurs basse et haute pression 3, 4, la chambre de combustion 5 et les turbines haute et basse pression 6, 7 sont situés au niveau de la veine primaire 8.

La turbine haute pression 6 entraîne le compresseur haute pression 4 par l'intermédiaire d'un arbre dit haute pression. La turbine basse pression 7 entraîne le compresseur basse pression 3 et la soufflante 2, au travers d'un arbre dit basse pression et éventuellement au travers d'un réducteur de vitesses dans le cas où la vitesse de rotation de la soufflante 2 est plus faible que la vitesse de rotation du compresseur basse pression 3.

La majeure partie de la poussée générée par la turbomachine 1 est produite par le flux secondaire F2, en aval de la soufflante 2.

La soufflante 2 est entourée par un carter de soufflante 10, un carter dit intermédiaire 11 étant situé en aval du carter de soufflante 10. Le carter intermédiaire 11 comporte une virole radialement externe 12 située dans le prolongement du carter de soufflante 10 et une partie dite inter-veine 13, située entre les veine primaire 8 et secondaire 9. La partie inter-veine 13 comporte un bec séparateur 14 à son extrémité amont et est reliée à la virole externe 12 par des bras dit structuraux 15.

La turbomachine 1 comporte par ailleurs un carter central 16, situé en aval de la partie inter-veine 13 du carter intermédiaire 11, et un carter d'échappement 17, situé en aval du carter central 16 et sur lequel est rapporté un cône d'éjection 18. Le carter d'échappement 17 comporte une virole radialement interne 19 et une virole radialement externe 20, reliées par des pales s'étendant radialement. Les viroles interne 19 et externe 20 du carter d'échappement 17 délimitent entre elles l'extrémité aval de la veine primaire 8.

Comme illustré à la figure 2, la nacelle 21 de l'ensemble propulsif comporte classiquement une nacelle de soufflante 22, entourant la soufflante 2 ainsi que le carter de soufflante 10 et la virole externe 12 du carter intermédiaire 11. La nacelle de soufflante 22 forme une lèvre d'entrée d'air 23 à son extrémité amont. La nacelle 21 comporte en outre une nacelle de moteur 24 entourant les zones de la turbomachine 1 comportant le compresseur haute pression 4, la chambre de combustion 5, la turbine haute pression 6, et la turbine basse pression 7 notamment.

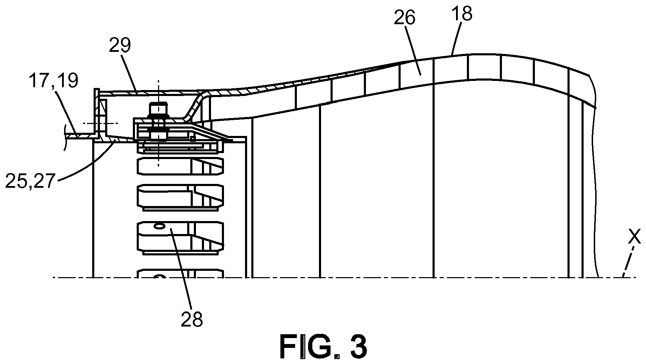

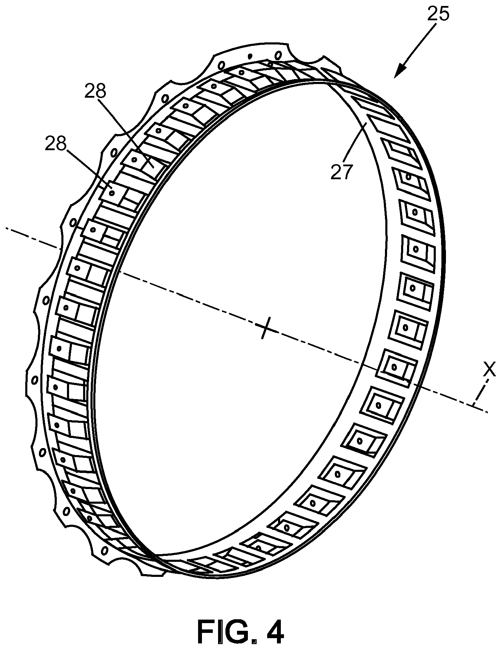

Comme cela est illustré à la figure 3 et est connu du document FR 3 084 916 au nom de la Demanderesse, l'extrémité amont du cône d'éjection 18 est reliée à l'extrémité aval de la virole interne 19 du carter d'échappement 17 par l'intermédiaire d'une bride de liaison annulaire 25 (visible également à la figure 4). Le cône 18 est généralement réalisé en matériau composite à matrice céramique, également désigné sous l'acronyme anglais CMC. Le cône 18 peut en particulier comporter une peau radialement externe et une peau radialement interne délimitant entre elle un caisson acoustique dans lequel est logée une structure acoustique interne 26. La virole interne 19 du carter d'échappement 18 est métallique, par exemple en alliage de titane.

La bride 25 est métallique, par exemple an alliage de titane, et comporte une partie annulaire 27 d'axe X, à partir de laquelle s'étendent des pattes flexibles 28. Les pattes 28 sont régulièrement réparties sur la circonférence.

De telles pattes souples ou flexibles 28 permettent de compenser les phénomènes de dilatation différentielle intervenant entre la virole interne 19 du carter d'échappement 17 et le cône 18, ces deux éléments 17, 18 étant réalisés dans des matériaux différents.

Un carénage annulaire 29 formé d'une seule pièce peut venir entourer les pattes et s'étendre dans le prolongement de la virole interne 19 et de la peau externe du cône 18.

On appelle ensemble d'échappement l'ensemble formé par le carter d'échappement 17, le cône d'éjection 18, la bride 25 et le carénage 29. En fonction des configurations, le montage et/ou le démontage d'un tel ensemble est généralement réalisé par l'aval et par le volume intérieur dudit ensemble, ce qui peut être difficile à réaliser par un opérateur, le volume précité pouvant être de faible dimension.

Un ensemble pour une turbomachine selon l'art antérieur est également divulgué dans le document FR2949820.

### Présentation de l'invention

L'invention vise à remédier à cet inconvénient, de manière simple, fiable et peu onéreuse.

A cet effet, l'invention concerne un ensemble pour une turbomachine comportant un cône d'éjection et un carter d'échappement comportant une virole interne annulaire, le cône d'éjection et le carter d'échappement s'étendant autour d'un axe, le cône d'éjection comportant une peau radialement externe s'étendant dans le prolongement de ladite virole interne et une peau radialement interne délimitant un caisson avec la peau externe, l'extrémité amont du cône étant fixée à la virole interne par l'intermédiaire de pattes de liaison, l'ensemble comportant un carénage annulaire situé radialement à l'extérieur desdites pattes et s'étendant axialement entre la virole interne du carter d'échappement et la peau externe du cône d'éjection, ledit carénage s'étendant dans le prolongement de ladite virole interne et de la peau externe, caractérisé en ce que le carénage est sectorisé et est formé de plusieurs secteurs angulaires agencés circonférentiellement bout à bout, et en ce qu'il comporte un joint annulaire s'étendant radialement entre l'extrémité aval du carénage et le cône.

Les termes amont et aval sont définis par rapport au sens de circulation des gaz au sein de la turbomachine. Les termes axial, radial et circonférentiel sont définis par rapport à l'axe du cône et du carter d'échappement, qui est confondu avec l'axe de la turbomachine. L'utilisation de plusieurs secteurs angulaires pour la réalisation du carénage permet de faciliter le montage et le démontage de l'ensemble.

Le caisson peut être un caisson acoustique, c'est-à-dire ayant notamment pour fonction d'atténuer les bruits.

Les pattes de liaison peuvent être souples ou élastiquement déformables.

Le nombre de secteurs angulaires peut être compris entre 2 et 16 et est par exemple égal à 4.

Le carénage peut comporter une extrémité amont fixée à la virole interne du carter d'échappement ou à une bride fixée à ladite virole interne, et une zone aval opposée supportée par un organe support, ledit organe support s'étendant radialement entre ladite zone aval du carénage et le cône.

Plus particulièrement, l'organe support peut être agencé radialement entre le carénage et la peau externe du cône.

L'organe support peut être radialement déformable.

Plusieurs organes support peuvent être agencés radialement entre le carénage et le cône. Les organes support peuvent être régulièrement répartis sur la circonférence.

Chaque organe support peut comporter une partie plane radialement interne, fixée à l'extrémité amont du cône, en particulier à l'extrémité amont de la peau externe, une partie plane radialement externe, fixée au carénage, et une partie plane médiane s'étendant radialement entre les parties interne et externe. La partie interne et/ou la partie externe peuvent être fixées par soudage, rivetage ou boulonnage au carénage ou au cône. La partie médiane de chaque organe support peut s'étendre de façon oblique par rapport à la direction radiale. L'organe support peut présenter une forme générale en Z.

L'ensemble comporte un joint annulaire s'étendant radialement entre l'extrémité aval du carénage et le cône.

Un tel joint empêche qu'un débit de fuite de gaz issu de la veine primaire pénètre dans le volume situé radialement à l'intérieur du carénage.

Le joint peut s'étendre en particulier entre ladite extrémité aval du carénage et la peau externe du cône.

Le joint peut être déformable dans la direction radiale.

Le joint peut comporter une partie de fixation au carénage ou au cône, et une partie médiane en forme de tôle, s'étendant de façon oblique par rapport à la direction radiale.

La partie médiane annulaire est ainsi conique.

Ladite partie médiane peut comporter une série de doigts adjacents, les doigts étant déformables élastiquement de façon individuelle les uns par rapport aux autres.

Le joint peut comporter une extrémité arrondie en appui sur le cône ou le carénage, directement ou par l'intermédiaire d'un élément d'appui fixé sur ledit cône ou ledit carénage. Une telle extrémité arrondie permet de réaliser un appui linéique étanche avec la surface du cône ou du carénage sur laquelle elle vient en appui.

Ladite partie médiane peut s'étendre de l'aval vers l'amont et radialement de l'extérieur vers l'intérieur.

Ladite partie médiane peut s'étendre de l'amont vers l'aval et radialement de l'extérieur vers l'intérieur.

En fonction de la position radialement externe ou radialement interne de la partie de fixation du joint et de l'orientation de l'inclinaison de la partie médiane du joint, la forme de réalisation est utilisée lorsque la pression dans la veine secondaire est supérieure ou inférieure à la pression radialement à l'intérieur du carénage, de manière à plaquer l'extrémité radiale libre du joint sur le carénage ou le cône du fait de la différence de pression d'un côté et de l'autre de la partie médiane du joint.

Le joint peut comporter une zone de section arrondie creuse.

Un tel joint peut comporter une base élargie fixée au carénage ou au cône, en particulier à la peau externe du cône, la zone de section arrondie creuse s'étendant depuis la base.

Des extrémités circonférentielles de deux secteurs de carénage adjacents peuvent se recouvrir circonférentiellement.

Un tel recouvrement permet de limiter le débit de fuite radialement vers l'intérieur depuis la veine primaire.

La zone de recouvrement peut s'étendre sur une plage comprise entre 10 et 100 mm, par exemple. Les secteurs de carénage peuvent être fixés les uns aux autres au niveau de la zone de recouvrement, par exemple par l'intermédiaire de moyens de fixation amovibles. Les moyens de fixation amovibles comportent par exemple des boulons.

Les secteurs angulaires adjacents peuvent être fixés l'un à l'autre et/ou fixés à la virole interne du carter d'échappement par l'intermédiaire de moyens de fixation amovibles.

Les moyens de fixation amovibles comportent par exemple des boulons.

De tels moyens amovibles permettent de pouvoir démonter aisément le carénage. L'extrémité amont du carénage peut être fixée à la virole interne du carter d'échappement par l'intermédiaire d'un rail annulaire de liaison. Le rail peut comporter une section de forme générale en L, comportant une partie annulaire radiale fixée à la virole interne du carter d'échappement, et une partie axiale annulaire servant à la fixation de l'extrémité amont du carénage.

L'ensemble peut comporter une bride annulaire reliant la virole interne du carter d'échappement au cône, la bride comportant lesdites pattes de liaison souples.

La bride comporte une partie annulaire fixée à la virole interne du carter d'échappement, les pattes de liaison s'étendant axialement depuis la partie annulaire. La partie annulaire peut venir ou non de matière avec les pattes. Les pattes peuvent être planes et peuvent s'étendre chacune selon un axe parallèle à l'axe du cône et du carter d'échappement.

La bride peut être sectorisée et peut être formée de plusieurs secteurs angulaires agencés circonférentiellement de façon adjacente ou bout à bout, chaque secteur de bride comportant au moins une patte s'étendant de façon rectiligne selon un axe parallèle à l'axe du cône. L'ensemble peut comporter des organes d'étanchéité montés circonférentiellement entre les pattes. Lesdits organes peuvent être formés par des tôles ou des clinquants montés entre les pattes.

Un matériau alvéolaire, par exemple en nid d'abeille, peut être monté dans le caisson acoustique.

Le carénage peut être métallique, par exemple en alliage à base de nickel ou de titane, par exemple en Inconel. Le cône peut être réalisé, en tout ou partie, en matériau composite à matrice céramique, également connu sous l'acronyme anglais CMC. Le carter d'échappement peut être métallique, par exemple en alliage à base de nickel ou de titane. Le montage d'un tel ensemble peut comporter l'une ou plusieurs des étapes consistant à :
- monter le rail de liaison annulaire et/ou la bride sur le carter d'échappement,
- monter le sous-ensemble formé par la peau interne, la peau externe et/ou un matériau acoustique contenu dans le caisson acoustique, sur la bride souple,
- monter les secteurs angulaires du carénage.

L'invention concerne également une turbomachine comportant au moins un ensemble du type précité.

### Brève description des figures

[Fig. 1] est une vue schématique en coupe axiale d'une turbomachine de l'art antérieur,
[Fig. 2] est une vue schématique en coupe axiale d'un ensemble propulsif de l'art antérieur, [Fig. 3] est une demie vue en coupe axiale d'une partie d'un ensemble d'éjection de turbomachine de l'art antérieur,
[Fig. 4] est une vue en perspective d'une bride de liaison entre un cône d'éjection et un carter d'échappement, conformément à l'art antérieur,
[Fig. 5] est une vue en perspective et en coupe axiale d'une partie d'un ensemble selon une forme de réalisation de l'invention,
[Fig. 6] est une vue en section d'une partie dudit ensemble,
[Fig. 7] est une vue détail de la figure 6, les moyens de fixation étant représentés,
[Fig. 8] est une vue en perspective illustrant les secteurs de carénage,
[Fig. 9] est une vue en section radiale d'une partie de l'ensemble,
[Fig. 10] est une vue éclatée, en perspective et en coupe axiale, d'une partie de l'ensemble,
[Fig. 11] est une vue de face et éclatée partiellement, illustrant les différents secteurs du carénage autour du reste de l'ensemble,
[Fig. 12] est une vue correspondant à la figure 7, illustrant une autre forme de réalisation de l'invention,
[Fig. 13] est une vue correspondant à la figure 7, illustrant une autre forme de réalisation de l'invention,
[Fig. 14] est une vue correspondant à la figure 7, illustrant une autre forme de réalisation de l'invention,
[Fig. 15] est une vue correspondant à la figure 7, illustrant une autre forme de réalisation de l'invention,
[Fig. 16] est une vue en perspective d'une partie d'un ensemble selon l'invention, le carénage ayant été retiré.

### Description détaillée de l'invention

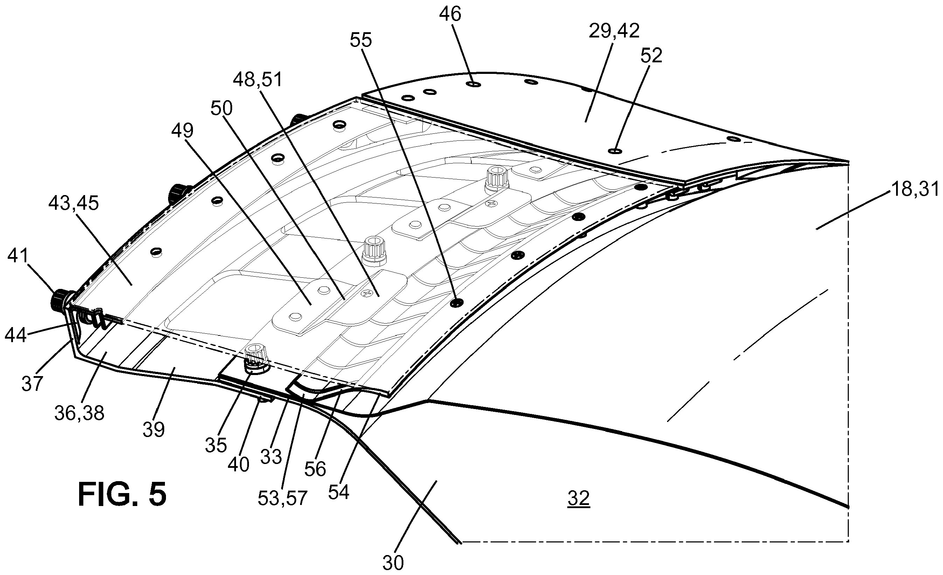

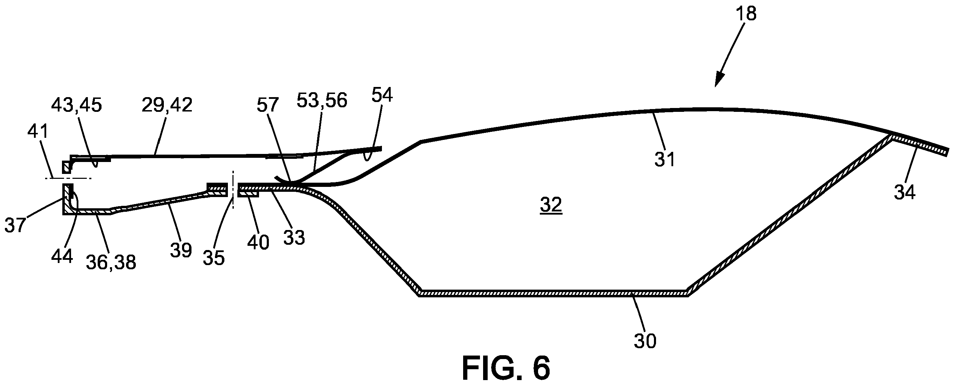

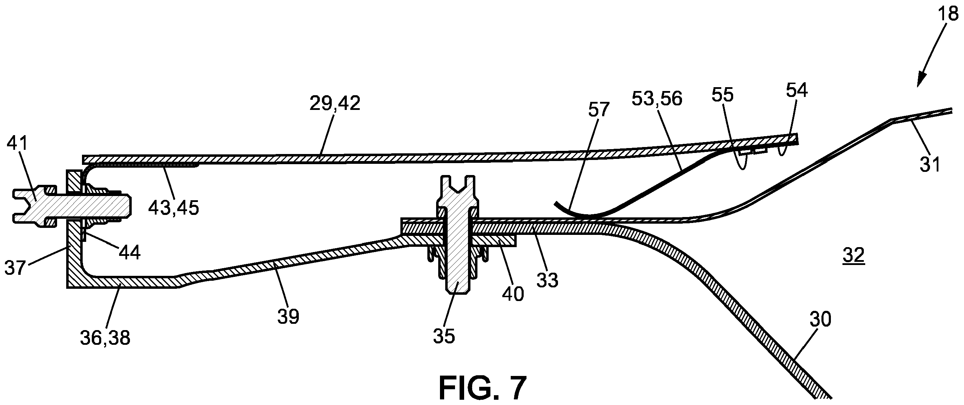

Les figures 5 à 11 illustrent un ensemble d'échappement pour une turbomachine 1 d'aéronef selon une forme de réalisation de l'invention. Cet ensemble comporte un carter d'échappement 17 (non représenté sur ces figures) comportant, comme précédemment, une virole annulaire radialement interne 19 et une virole annulaire radialement externe 20, reliées par des pales radiales.

L'ensemble comporte en outre un cône d'éjection 18 comportant une peau radialement interne 30 et une peau radialement externe 31, délimitant entre elles un caisson acoustique 32. Un matériau alvéolaire, par exemple en nid d'abeille, peut être logé dans le caisson acoustique 32. Ce matériau peut être brasé, collé ou co-injecté avec l'une ou l'autre des peaux interne 30 ou externe 31, par exemple. Les peaux interne 30 et externe 31 sont fixées l'une à l'autre à leur extrémités amont 33 et aval 34, par collage, brasage ou par l'intermédiaire de moyens de fixation tels que des rivets ou des boulons 35.

Une bride annulaire 36, sectorisé ou non, relie l'extrémité aval de la virole interne 19 du carter d'échappement 17 et l'extrémité amont 33 du cône d'éjection 18.

La bride 36 comporte, de l'amont vers l'aval, une partie annulaire radiale de fixation 37, une partie annulaire axiale 38, des pattes de liaison 39 et une partie annulaire axiale de fixation 40, qui peut être annulaire ou formée par les extrémités des pattes 39.

La partie 37 est fixée à la virole interne 19 du carter d'échappement 17, par exemple par l'intermédiaire de boulons 41. La partie 40 est fixée aux extrémités amonts des peaux du cône, par exemple par l'intermédiaire des boulons 35.

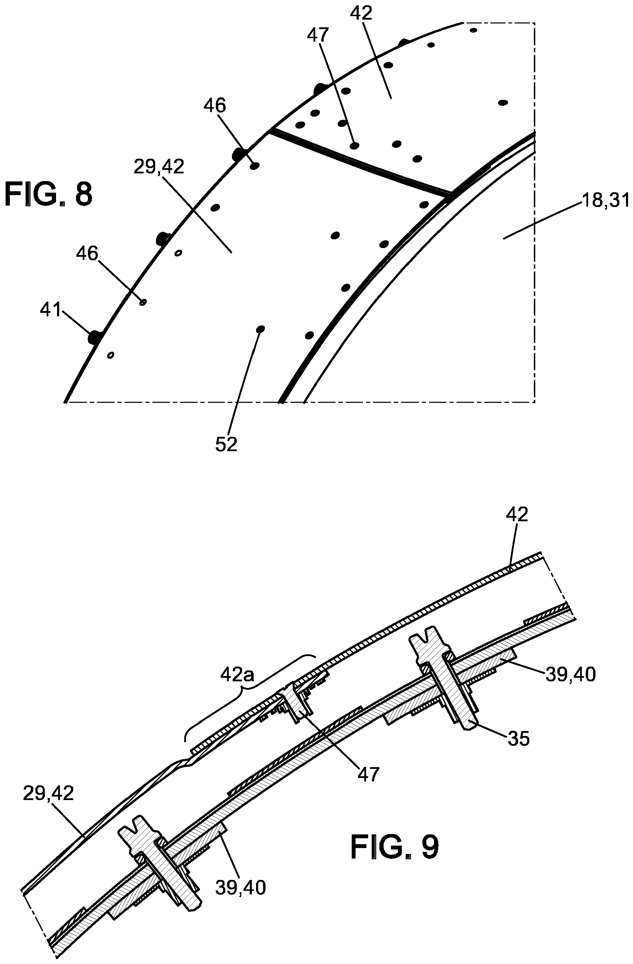

Un carénage 29 annulaire et sectorisé (figure 8) entoure les pattes 39 et les extrémités amonts 33 des peaux interne 30 et externe 31. Le carénage 29 s'étend dans le prolongement de la surface externe de la virole interne 19 du carter d'échappement 17 et dans le prolongement de la peau externe 31, de manière à assurer une continuité de surface de la veine primaire 8 dans cette zone.

Le carénage 29 est ainsi constitué de plusieurs secteurs 42, par exemple 4 secteurs, régulièrement répartis sur la circonférence et agencés bout à bout. L'extrémité amont de chaque secteur 42 est fixée sur la partie 37 de la bride 36, par l'intermédiaire d'un rail annulaire 43 de section en L. Ledit rail 43 comporte une partie radiale 44 fixée à la partie radiale 37 de la bride 36 par l'intermédiaire d'au moins une partie des moyens de fixation 41 ou par l'intermédiaire de moyens de fixation distincts, et une partie axiale 45 fixée à l'extrémité amont de chaque secteur 42, par l'intermédiaire de moyens de fixation, en particulier amovibles, par exemple des boulons 46. Comme cela est visible à la figure 9, les extrémités circonférentielles des secteurs 42 adjacents se recouvrent au niveau de zones de recouvrement 42a et sont fixés les uns par rapport aux autres au niveau de ces zones de recouvrement 42a, par l'intermédiaire de moyens de fixation amovibles 47.

Des organes supports 48 régulièrement répartis sur la circonférence s'étendent radialement entre l'extrémité amont 33 de la peau externe 31 et une zone aval du carénage 29. Chaque organe support 48 comporte une partie amont 49 radialement interne fixée par tous moyens approprié, par exemple par rivetage, aux extrémités amonts 33 des peaux interne et/ou externe 30, 31, une partie médiane oblique 50 formant un angle avec la direction axiale et la direction radiale, et une partie aval 51 radialement externe fixée par tous moyens appropriés aux secteurs du carénage 29, de préférence par l'intermédiaire de moyens de fixation amovibles tels que des boulons 52.

Un joint annulaire 53 est montée radialement à l'intérieur du carénage 29. Ledit joint 53 peut être sectorisé ou non et comporte une partie aval radialement externe 54, fixée par tous moyens appropriés 55, à l'extrémité aval du carénage 29, une partie médiane oblique 56 et une partie amont 57 radialement interne arrondie maintenue élastiquement en appui sur l'extrémité amont 33 de la peau externe 31. La partie médiane 56 est formés de doigts adjacents, les doigts étant déformables élastiquement de façon individuelle les uns par rapport aux autres.

L'appui de la partie interne 57 du joint 53 sur la peau externe 31 est par exemple un appui linéique, du fait de la forme arrondie de ladite partie interne 57.

Dans cette forme de réalisation, la partie médiane 56 est tronconique et est inclinée de l'amont vers l'aval et radialement de l'intérieur vers l'extérieur.

Le joint 53 permet de limiter ou d'éviter l'introduction de gaz chauds issus de la turbine 7 dans le volume situé radialement à l'intérieur du carénage 29.

Une telle forme de réalisation peut notamment être utilisée lorsque la pression dans le volume situé radialement à l'intérieur du carénage 29 est supérieure à la pression des gaz au niveau de la veine primaire 8, de façon à maintenir l'extrémité interne du joint 53 en appui sur la peau externe 31, du fait de la différence de pression.

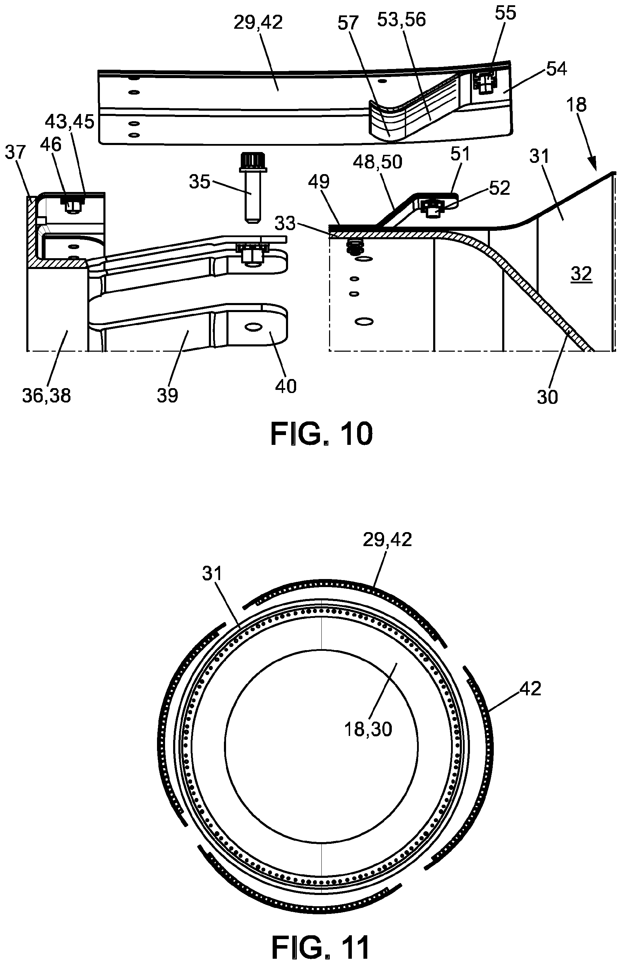

Les figures 10 et 11 illustrent le procédé montage d'un tel ensemble. Un tel procédé comporte les étapes successives consistant à :
- monter le rail de liaison annulaire 43 et la bride 36 sur le carter d'échappement 17,
- monter le sous-ensemble formé par la peau interne 30, la peau externe 31 et le matériau acoustique contenu dans le caisson acoustique 32, sur la bride 36 souple,
- monter les secteurs angulaires 42 du carénage 29.

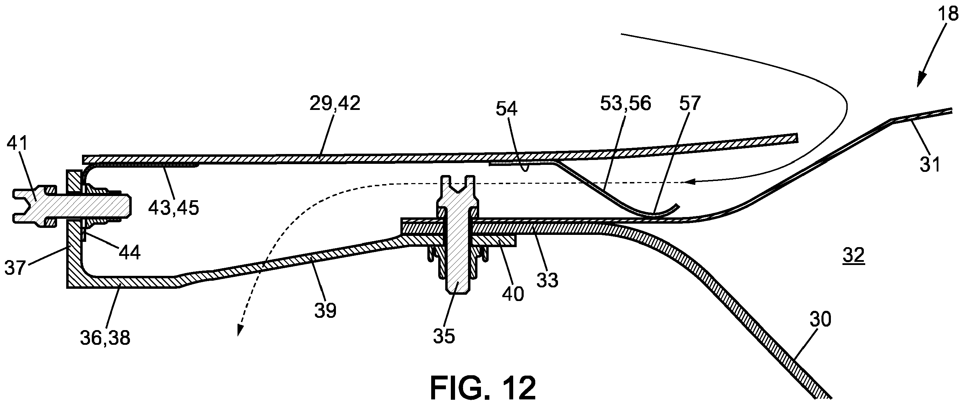

La figure 12 illustre une autre forme de réalisation de l'invention, qui diffère de celle décrite précédemment en référence aux figures 5 à 11 en ce que la partie médiane 56 s'étend de l'amont vers l'aval et radialement de l'extérieur vers l'intérieur.

Une telle forme de réalisation peut notamment être utilisée lorsque la pression dans le volume situé radialement à l'intérieur du carénage 29 est inférieure à la pression des gaz au niveau de la veine primaire 8, de façon à maintenir l'extrémité interne 57 du joint 53 en appui sur la peau externe 31, du fait de la différence de pression.

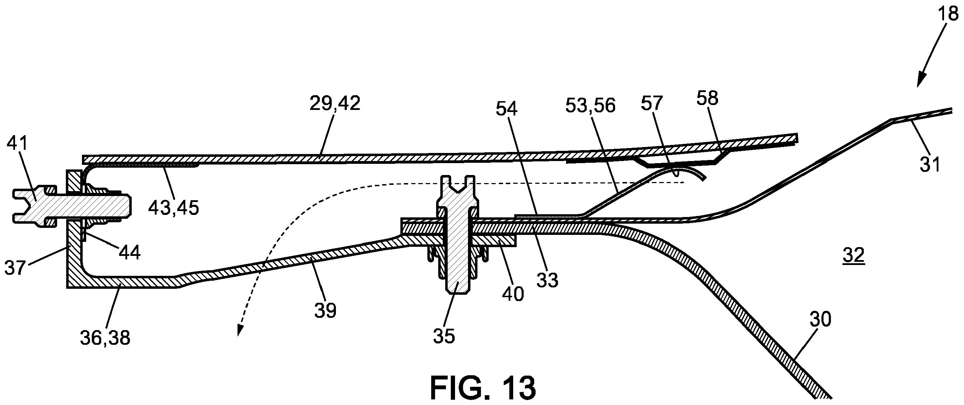

La figure 13 illustre une autre forme de réalisation, qui diffère de celles illustrées en référence aux figures 5 à 12 en ce que la partie 54 est située à l'amont et radialement à l'intérieur et est fixée à la peau externe 31, la partie 57 étant située en aval et radialement à l'extérieur et vient en appui sur un élément d'appui fixé 58 sur le carénage 29. Dans cette forme de réalisation également, la partie médiane 56 est inclinée de l'amont vers l'aval et radialement de l'intérieur vers l'extérieur.

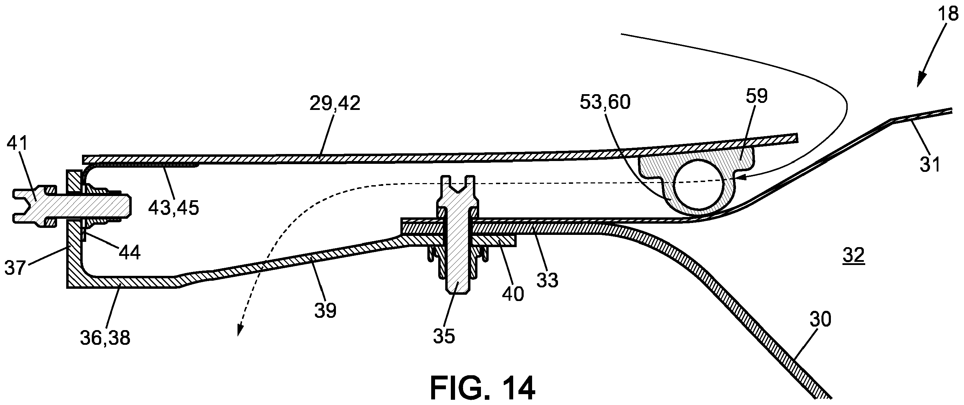

La figure 14 illustre une autre forme de réalisation dans laquelle le joint annulaire 53 comporte une base 59 radialement externe fixée au carénage 29 et une partie 60 de section circulaire creuse, élastiquement déformable dans la direction radiale et venant en appui sur la peau externe 31. Comme précédemment, le joint 53 peut être sectorisé.

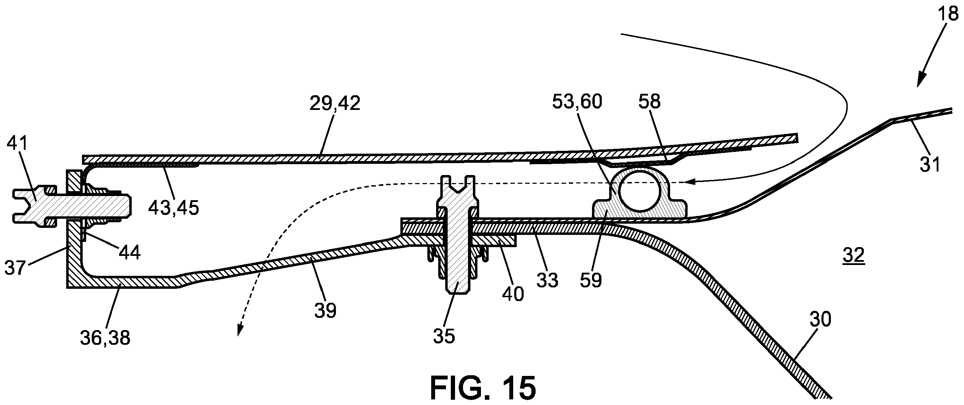

La figure 15 illustre une autre forme de réalisation de l'invention, qui diffère de celle illustrée à la figure 14 en ce que la base 59 est radialement interne et est fixée à la peau externe 31, la partie de section circulaire 60 venant en appui sur un élément d'appui 58 fixé au carénage 29.

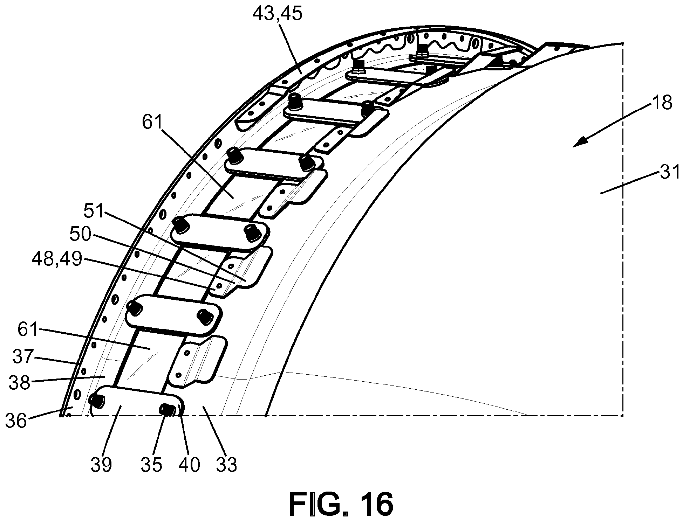

La figure 16 illustre une autre forme de réalisation dans laquelle des organes d'étanchéité 61 sont montés circonférentiellement entre les pattes 39. Lesdits organes 61 peuvent être formés par des tôles ou des clinquants montés entre les pattes 39. Ces organes 61 permettent de limiter encore les débits de fuite de gaz chauds issus de la veine primaire 8.

Les pattes 39 peuvent être réalisées par des pièces distinctes de la bride 36, les extrémités amont des pattes 39 étant alors fixées à la partie axiale 38 de la bride 36.

## Revendications

1. Ensemble pour une turbomachine (1) comportant un cône d'éjection (18) et un carter d'échappement (17) comportant une virole interne annulaire (19), le cône d'éjection (18) et le carter d'échappement (17) s'étendant autour d'un axe (X), le cône d'éjection (18) comportant une peau radialement externe (31) s'étendant dans le prolongement de ladite virole interne (19) et une peau radialement interne (30) délimitant un caisson (32) avec la peau externe (31), l'extrémité amont (33) du cône (18) étant fixée à la virole interne (19) par l'intermédiaire de pattes de liaison (39), l'ensemble comportant un carénage annulaire (29) situé radialement à l'extérieur desdites pattes (39) et s'étendant axialement entre la virole interne (19) du carter d'échappement (17) et la peau externe (31) du cône d'éjection (18), ledit carénage (29) s'étendant dans le prolongement de ladite virole interne (19) et de la peau externe (31), **caractérisé en ce que** le carénage (29) est sectorisé et est formé de plusieurs secteurs angulaires (42) agencés circonférentiellement bout à bout, et **en ce qu'**il comporte un joint annulaire (53) s'étendant radialement entre l'extrémité aval du carénage (29) et le cône (18).

2. Ensemble selon la revendication 1, **caractérisé en ce que** le carénage (29) comporte une extrémité amont fixée à la virole interne (19) du carter d'échappement (17) ou à une bride (36) fixée à ladite virole interne (17), et une zone aval opposée supportée par un organe support (48), ledit organe support (48) s'étendant radialement entre ladite zone aval du carénage (29) et le cône (18).

3. Ensemble selon la revendication 1 ou 2, **caractérisé en ce que** le joint (53) comporte une partie de fixation (54) au carénage (29) ou au cône (18), et une partie médiane (56) en forme de tôle, s'étendant de façon oblique par rapport à la direction radiale.

4. Ensemble selon la revendication 3, **caractérisé en ce que** ladite partie médiane (56) s'étend de l'aval vers l'amont et radialement de l'extérieur vers l'intérieur.

5. Ensemble selon la revendication 3, **caractérisé en ce que** ladite partie médiane (56) s'étend de l'amont vers l'aval et radialement de l'extérieur vers l'intérieur.

6. Ensemble selon l'une des revendications 1 à 5, **caractérisé en ce que** le joint (53) comporte une zone de section arrondie creuse (60).

7. Ensemble selon l'une des revendications 1 à 6, **caractérisé en ce que** des extrémités circonférentielles de deux secteurs de carénage (42) adjacents se recouvrent circonférentiellement (42a).

8. Ensemble selon l'une des revendications 1 à 7, **caractérisé en ce que** les secteurs angulaires adjacents (42) sont fixés l'un à l'autre et/ou fixés à la virole interne (19) du carter d'échappement (17) par l'intermédiaire de moyens de fixation amovibles (46, 47).

9. Turbomachine (1) comportant au moins un ensemble selon l'une des revendications 1 à 8.

## Patentansprüche

1. Anordnung für eine Turbomaschine bzw. ein Turbotriebwerk (1) mit einem Ausstoßkonus (18) und einem Austrittsgehäuse (17), das einen inneren Mantelring (19) aufweist, wobei sich der Ausstoßkonus (18) und das Austrittsgehäuse (17) um eine Achse (X) herum erstrecken, wobei der Ausstoßkonus (18) eine radial äußere Haut (31) aufweist, die sich in Fortsetzung des inneren Mantelrings (19) erstreckt, sowie eine radial innere Haut (30), die mit der äußeren Haut (31) einen Kasten (32) begrenzt, wobei das stromaufwärtige Ende (33) des Konus (18) über Verbindungslaschen (39) an den inneren Mantelring (19) befestigt ist, wobei die Anordnung eine ringförmige Verkleidung (29) umfasst, die sich radial außerhalb der genannten Laschen (39) befindet und sich axial zwischen dem inneren Mantelring (19) des Austrittsgehäuses (17) und der äußeren Haut (31) des Ausstoßkonus (18) erstreckt, wobei sich die Verkleidung (29) in Fortsetzung des inneren Mantelrings (19) und der äußeren Haut (31) erstreckt,
**dadurch gekennzeichnet, dass** die Verkleidung (29) sektorisiert ist und aus mehreren Winkelsektoren (42) gebildet ist, die in Umfangsrichtung auf Stoß angeordnet sind, und dass sie eine ringförmige Dichtung (53) aufweist, die sich radial zwischen dem stromabwärtigen Ende der Verkleidung (29) und dem Konus (18) erstreckt.

2. Anordnung nach Anspruch 1,
**dadurch gekennzeichnet, dass** die Verkleidung (29) ein stromaufwärtiges Ende, das an den inneren Mantelring (19) des Austrittsgehäuses (17) oder an einen an den inneren Mantelring (17) befestigten Flansch (36) befestigt ist, und einen gegenüberliegenden stromabwärtigen Bereich aufweist, der von einem Stützorgan (48) abgestützt wird, wobei sich das Stützorgan (48) radial zwischen dem stromabwärtigen Bereich der Verkleidung (29) und dem Konus (18) erstreckt.

3. Anordnung nach Anspruch 1 oder 2,
**dadurch gekennzeichnet, dass** die Dichtung (53) einen Befestigungsabschnitt (54) zum Befestigen an die Verkleidung (29) oder den Konus (18) und einen blechförmigen Mittelabschnitt (56) aufweist, der sich schräg zur Radialrichtung erstreckt.

4. Anordnung nach Anspruch 3,
**dadurch gekennzeichnet, dass** sich der Mittelabschnitt (56) von stromabwärts nach stromaufwärts und radial von außen nach innen erstreckt.

5. Anordnung nach Anspruch 3,
**dadurch gekennzeichnet, dass** sich der Mittelabschnitt (56) von stromaufwärts nach stromabwärts und radial von außen nach innen erstreckt.

6. Anordnung nach einem der Ansprüche 1 bis 5,
**dadurch gekennzeichnet, dass** die Dichtung (53) einen hohlen, abgerundeten Querschnittsbereich (60) aufweist.

7. Anordnung nach einem der Ansprüche 1 bis 6,
**dadurch gekennzeichnet, dass** sich Umfangsenden von zwei aneinandergrenzenden Verkleidungssektoren (42) in Umfangsrichtung überlappen (42a).

8. Anordnung nach einem der Ansprüche 1 bis 7,
**dadurch gekennzeichnet, dass** die aneinandergrenzenden Winkelsektoren (42) über lösbare Befestigungsmittel (46, 47) aneinander befestigt und/oder an den inneren Mantelring (19) des Austrittsgehäuses (17) befestigt sind.

9. Turbomaschine bzw. Turbotriebwerk (1) mit zumindest einer Anordnung nach einem der Ansprüche 1 bis 8.

## Claims

1. Assembly for a turbomachine (1) including an exhaust cone (18) and an exhaust case (17) including an annular inner shell (19), the exhaust cone (18) and the exhaust case (17) extending about an axis (X), the exhaust cone (18) including a radially outer skin (31) extending in the projection of said inner shell (19) and a radially inner skin (30) defining a chamber (32) with the outer skin (31), the upstream end (33) of the cone (18) being fastened to the inner shell (19) via connecting lugs (39), the assembly including an annular fairing (29) located radially outside said lugs (39) and extending axially between the inner shell (19) of the exhaust case (17) and the outer skin (31) of the exhaust cone (18), said fairing (29) extending in the projection of said inner shell (19) and of the outer skin (31), **characterized in that** the fairing (29) is segmented and consists of several angular segments (42) arranged circumferentially end to end, and **in that** it includes an annular seal (53) extending radially between the downstream end of the fairing (29) and the cone (18)..

2. Assembly according to claim 1, **characterized in that** the fairing (29) includes an upstream end fastened to the inner shell (19) of the exhaust case (17) or to a flange (36) fastened to said inner shell (17), and an opposite downstream zone supported by a support member (48), said support member (48) extending radially between said downstream zone of the fairing (29) and the cone (18).

3. Assembly according to claim 1 or 2, **characterized in that** the seal (53) includes a fastening portion (54) to the fairing (29) or to the cone (18), and a median portion (56) in sheet form, extending obliquely in relation to the radial direction.

4. Assembly according to claim 3, **characterized in that** said median portion (56) extends from downstream to upstream and radially from the outside inward.

5. Assembly according to claim 3, **characterized in that** said median portion (56) extends from upstream to downstream and radially from the outside inward.

6. Assembly according to one of claims 1 to 5, **characterized in that** the seal (53) includes a zone of hollow rounded cross-section (60).

7. Assembly according to one of claims 1 to 6, **characterized in that** circumferential ends of two adjacent fairing segments (42) overlap circumferentially (42a).

8. Assembly according to one of claims 1 to 7, **characterized in that** the adjacent angular segments (42) are fastened to one another and/or fastened to the inner shell (19) of the exhaust case (17) via removable fastening means (46, 47).

9. Turbomachine (1) including at least one assembly according to one of claims 1 to 8.
